# EUROPEAN PATENT APPLICATION

(11) **EP 4 503 701 A1**
(43) Date of publication of application: **05.02.2025**
(21) Application number: 23386074.1
(22) Date of filing: 04.08.2023
(51) Int. Cl.: H04W 24/02, H04W 84/00

(54) **METHOD FOR USING AN INTEGRATED ACCESS AND BACKHAUL ENTITY OR FUNCTIONALITY WITHIN OR AS PART OF A MOBILE COMMUNICATION NETWORK, SYSTEM OR TELECOMMUNICATIONS NETWORK OR INTEGRATED ACCESS AND BACKHAUL ENTITY OR FUNCTIONALITY, PROGRAM AND COMPUTER-READABLE MEDIUM**

(71) Applicant: Deutsche Telekom AG, 53113 Bonn (DE); HELLENIC TELECOMMUNICATIONS ORGANIZATION S.A., 15124 Athen, Marousi (GR)
(72) Inventor: KLATT, Axel, 50999 Köln (DE); ZIMMERMANN, Gerd, Dr., 64331 Weiterstadt (DE); BEYER, Jürgen, Dr., 57250 Netphen (DE); NIKOLITSA, Eftychia, 151 22 Maroussi (GR)
(74) Representative: Schwöbel, Thilo K.

(57) **Abstract**

Method for using an integrated access and backhaul entity or functionality within or as part of a mobile communication network, wherein the mobile communication network comprises a radio access network besides the integrated access and backhaul entity or functionality, the radio access network comprising a plurality of radio access network nodes and/or base station entities realizing a plurality of radio cells of the radio access network, wherein each one of the radio cells uses a physical cell identity information in a manner such that neighboring or adjacent radio cells of the radio access network use different pieces of physical cell identity information,
wherein the integrated access and backhaul entity or functionality likewise uses at least one piece of specific physical cell identity information,
wherein in order to assign or to allocate the at least one piece of specific physical cell identity information to the integrated access and backhaul entity or functionality in a manner such that radio cells of the radio access network which radio cells are located in the vicinity of the integrated access and backhaul entity or functionality use different pieces of physical cell identity information, the method comprises the step of assigning or allocating the at least one specific physical cell identity information to the integrated access and backhaul entity or functionality in a dynamic process of physical cell identity allocation.

## Description

### BACKGROUND

The present invention relates a method for using an integrated access and backhaul entity or functionality within or as part of a mobile communication network, wherein the mobile communication network comprises a radio access network besides the integrated access and backhaul entity or functionality, the radio access network comprising a plurality of radio access network nodes and/or base station entities realizing a plurality of radio cells of the radio access network, wherein each one of the radio cells uses a physical cell identity information in a manner such that neighboring or adjacent radio cells of the radio access network use different pieces of physical cell identity information, wherein the integrated access and backhaul entity or functionality likewise uses at least one piece of specific physical cell identity information.

Furthermore, the present invention relates to a system or to a mobile communication network or to an integrated access and backhaul entity or functionality being used within or as part of the mobile communication network, wherein the mobile communication network comprises a radio access network besides the integrated access and backhaul entity or functionality, the radio access network comprising a plurality of radio access network nodes and/or base station entities realizing a plurality of radio cells of the radio access network, wherein each one of the radio cells uses a physical cell identity information in a manner such that neighboring or adjacent radio cells of the radio access network use different pieces of physical cell identity information, wherein the integrated access and backhaul entity or functionality likewise uses at least one piece of specific physical cell identity information.

Furthermore, the present invention relates to a program and to a computer-readable medium for using an integrated access and backhaul entity or functionality within or as part of a mobile communication network according to the inventive method.

The present invention relates to the area of telecommunications networks, especially wireless telecommunications networks or mobile communication networks. In conventionally known mobile communication networks, it is known to use integrated access and backhaul devices, especially mobile integrated access and backhaul devices, which is a feature that enables the integration of access and backhaul functions in a single device, allowing for a more efficient and flexible deployment of mobile communication networks, especially mobile communication networks according to the 5G (fifth generation) standard, especially a 3GPP standard.
Traditional mobile communication network deployments, especially network deployments according to the 5G standard, typically require separate devices for access and backhaul functions, such as, e.g., base stations (for providing access functionalities to other user equipments or mobile stations) and routers (for providing backhaul functionalities), respectively.
However, with integrated access and backhaul devices - especially mobile integrated access and backhaul devices -, a single device is able to provide both access and backhaul functions, reducing the need for separate infrastructure and simplifying network deployment.

Integrated access and backhaul devices, especially mobile integrated access and backhaul devices (and especially in 5G i.e. according to the 5G standard), are comparatively small and compact, making them ideal for deployment in areas with limited space, such as urban environments. They can also be easily deployed in locations where it may be difficult or expensive to install separate access and backhaul devices, such as in remote or rural areas, and their main benefit is that there is no need for a fixed line backhaul as an integrated access and backhaul node is connected to a donor base station via wireless backhaul using potentially the same frequency band as the access link.
Furthermore, integrated access and backhaul devices, especially mobile integrated access and backhaul devices in 5G mobile communication networks, also enable a more flexible network architecture, allowing for dynamic and scalable network deployments. It can be used to extend the coverage of an existing network or to deploy a new network quickly and cost-effectively.
In summary, the use of (mobile) integrated access and backhaul devices, especially in 5G mobile communication networks, is a feature that enables the integration of access and backhaul functions in a single device, simplifying network deployment, reducing infrastructure requirements, and enabling a more flexible network architecture. It is particularly useful in urban and remote environments where space and infrastructure may be limited.

From an architectural point of view, an integrated access and backhaul, IAB, node (or device) or a mobile integrated access and backhaul, mlAB, node (or device) consists of:
-- a mobile termination entity (IAB-MT or mIAB-MT) which acts against the (residual) mobile radio network (i.e. the radio access network (of the mobile communication network) besides the (mobile) integrated access and backhaul device) as a user equipment, and
- a distributed unit (IAB-DU or mIAB-DU) entity, acting as a base station entity (e.g. a gNB in case a mobile communication network according to the 5G standard) towards user equipments that are connected to it; based on the 3GPP specification for fixed IAB nodes in Rel-16/17 only the gNB-DU part of a disaggregated gNB (split into one gNB-CU (Central Unit) and one or more gNB-DUs) has to be realized in an IAB node.
E.g., in case of (mobile) integrated access and backhaul device or entity used in a vehicle, those user equipments used by passengers aboard that vehicle might use the integrated access and backhaul device or entity.

Any integrated access and backhaul device or entity, or mobile integrated access and backhaul device or entity, creates a normal radio cell on the access side which requires all necessary information / characteristics as any other radio cell of the mobile communication network, especially a 5G network; in particular, such an integrated access and backhaul-generated radio cell needs to be configured with a physical cell identity (PCI) information.
However, the number of unique pieces of physical cell identity information is limited (especially to 1008 in the case of new radio, NR, radio cells, especially as part of a 5G mobile communication network), and with a massively increasing use of integrated access and backhaul devices, especially mobile integrated access and backhaul devices, a rather static allocation or distribution of such pieces of physical cell identity information to such integrated access and backhaul devices - e.g. out of a specific (static) range of pieces of physical cell identity information that is reserved for integrated access and backhaul devices or, especially, mobile integrated access and backhaul devices - becomes more and more difficult to realize or implement.

### SUMMARY

An object of the present invention is to provide an effective and simple approach for using an integrated access and backhaul entity or functionality within or as part of a mobile communication network such that the use of an important number of, especially mobile, integrated access and backhaul entities or functionalities, as well as the assignment or allocation of pieces of physical cell identity information is able to be realized in a dynamic and flexible manner. A further object of the present invention is to provide a corresponding system or mobile communication network, and a corresponding program and computer-readable medium.

The object of the present invention is achieved by a method for using an integrated access and backhaul entity or functionality within or as part of a mobile communication network, wherein the mobile communication network comprises a radio access network besides the integrated access and backhaul entity or functionality, the radio access network comprising a plurality of radio access network nodes and/or base station entities realizing a plurality of radio cells of the radio access network, wherein each one of the radio cells uses a physical cell identity information in a manner such that neighboring or adjacent radio cells of the radio access network use different pieces of physical cell identity information,
wherein the integrated access and backhaul entity or functionality likewise uses at least one piece of specific physical cell identity information,
wherein in order to assign or to allocate the at least one piece of specific physical cell identity information to the integrated access and backhaul entity or functionality in a manner such that radio cells of the radio access network which radio cells are located in the vicinity of the integrated access and backhaul entity or functionality use different pieces of physical cell identity information, the method comprises the step of assigning or allocating the at least one specific physical cell identity information to the integrated access and backhaul entity or functionality in a dynamic process of physical cell identity allocation.

It is thereby advantageously possible, according to the present invention, that a flexible dynamic process of PCI allocation for integrated access and backhaul entities or functionalities - especially mobile integrated access and backhaul entities or functionalities - is possible, especially those installed or mounted, for example, in a bus or tram or car, or another public or private vehicle, to provide in-carriage coverage. Especially, it is proposed, according to the present invention, that any one of all possible pieces of physical cell identity information (1008 different pieces of physical cell identity information according to the new radio, NR, standard) are potentially able to be allocated or assigned to the considered integrated access and backhaul entity or functionality in a dynamic manner.

According to the present invention, it is advantageously possible and preferred that any one of all possible pieces of physical cell identity information are potentially able to be allocated or assigned to the integrated access and backhaul entity or functionality, wherein especially the possible pieces of physical cell identity information correspond to all 1008 different pieces of physical cell identity information according to the new radio, NR, standard,
wherein especially a first range of possible pieces of physical cell identity information are potentially able to be allocated or assigned to the radio cells of the radio access network and a second range of possible pieces of physical cell identity information are potentially able to be allocated or assigned to the integrated access and backhaul entity or functionality, and wherein the first and second range at least partially overlap, preferably completely overlap.

According to the present invention, it is thereby advantageously possible that the inventive method is able to be performed in a flexible and efficient manner.

According to the present invention, it is furthermore advantageously possible and preferred that the integrated access and backhaul entity or functionality is a mobile integrated access and backhaul entity or functionality, especially aboard a vehicle, especially aboard a public transport vehicle, wherein the at least one piece of specific physical cell identity information is assigned or allocated to the integrated access and backhaul entity or functionality in a manner such that radio cells of the radio access network which radio cells are
-- currently located in the vicinity of the integrated access and backhaul entity or functionality, or
- currently and subsequently located in the vicinity of the integrated access and backhaul entity or functionality
use different pieces of physical cell identity information.

According to the present invention, it is thereby advantageously possible that the inventive method is able to be performed in a flexible and efficient manner.

According to the present invention, it is furthermore advantageously possible and preferred that the integrated access and backhaul entity or functionality comprises at least one mobile termination entity or functionality and at least one distributed unit, wherein especially for each distributed unit one piece of specific physical cell identity information assigned or allocated to the integrated access and backhaul entity or functionality.

According to the present invention, it is thereby advantageously possible that the inventive method is able to be performed in a flexible and efficient manner.

According to the present invention, it is furthermore advantageously possible and preferred that the at least one piece of specific physical cell identity information is assigned or allocated to the integrated access and backhaul entity or functionality based on at least one measurement, performed by the integrated access and backhaul entity or functionality regarding surrounding radio cells of the radio access network, wherein by means of the at least one measurement, the physical cell identity information used by the surrounding radio cells of the radio access network are determined by the integrated access and backhaul entity or functionality.

According to the present invention, it is thereby advantageously possible that the inventive method is able to be performed in a flexible and efficient manner.

According to the present invention, it is furthermore advantageously possible and preferred that the integrated access and backhaul entity or functionality, as a mobile integrated access and backhaul entity or functionality, travels along a predefined route or path or moves within a certain geographic area, wherein the at least one piece of specific physical cell identity information is assigned or allocated to the integrated access and backhaul entity or functionality, especially by means of using pre-configuration of an operations and maintenance entity or functionality of the mobile communication network, according to at least one out of the following:
- at least one piece of specific physical cell identity information is assigned or allocated regarding the complete predefined route or path or geographic area,
-- at least one first piece of specific physical cell identity information is assigned or allocated regarding a first part of the predefined route or path or geographic area, and at least one second piece of specific physical cell identity information is assigned or allocated regarding a second part of the predefined route or path or geographic area, wherein especially, the predefined route or path or geographic area and/or the first part of the predefined route or path or geographic area and the second part of the predefined route or path or geographic area is defined by means of global navigation satellite system coordinates and/or by means of geographically positioned features or characteristics of the mobile communication network, especially physical cell identity information and/or cell identity information, that are detectable by the integrated access and backhaul entity or functionality.

According to the present invention, it is thereby advantageously possible that the inventive method is able to be performed in a flexible and efficient manner.

According to the present invention, it is furthermore advantageously possible and preferred that the integrated access and backhaul entity or functionality is served by a serving radio cell of the radio cells of the radio access network, wherein the serving radio cell transmits, to the integrated access and backhaul entity or functionality, a physical cell identity indication,
wherein the physical cell identity indication relates to at least one piece of specific physical cell identity information
   -- that is able to be used by the integrated access and backhaul entity or functionality,
      and/or
   - that the integrated access and backhaul entity or functionality should refrain from using,
wherein the physical cell identity indication is transmitted, by the serving radio cell, using
   -- a broadcast channel, and/or
   - a dedicated channel, especially as part of a dedicated radio resource control signaling.

According to the present invention, it is thereby advantageously possible that the inventive method is able to be performed in a flexible and efficient manner.

Furthermore, the present invention relates to a system or to a mobile communication network or to an integrated access and backhaul entity or functionality being used within or as part of the mobile communication network, wherein the mobile communication network comprises a radio access network besides the integrated access and backhaul entity or functionality, the radio access network comprising a plurality of radio access network nodes and/or base station entities realizing a plurality of radio cells of the radio access network, wherein each one of the radio cells uses a physical cell identity information in a manner such that neighboring or adjacent radio cells of the radio access network use different pieces of physical cell identity information,
wherein the integrated access and backhaul entity or functionality likewise uses at least one piece of specific physical cell identity information,
wherein in order to assign or to allocate the at least one piece of specific physical cell identity information to the integrated access and backhaul entity or functionality in a manner such that radio cells of the radio access network which radio cells are located in the vicinity of the integrated access and backhaul entity or functionality use different pieces of physical cell identity information, the method comprises the step of assigning or allocating the at least one specific physical cell identity information to the integrated access and backhaul entity or functionality in a dynamic process of physical cell identity allocation.

Additionally, the present invention relates to a program comprising a computer readable program code which, when executed on a computer or on an integrated access and backhaul entity or functionality or on a network node of the radio access network or on a network node of the mobile communication network, especially an operations and maintenance entity or functionality, or in part on the integrated access and backhaul entity or functionality and/or in part on the network node of the radio access network and/or in part on the network node of the mobile communication network, especially the operations and maintenance entity or functionality, causes the computer or the integrated access and backhaul entity or functionality or the network node of the radio access network or the network node of the mobile communication network, especially the operations and maintenance entity or functionality, to perform the inventive method.

Still additionally, the present invention relates to a computer-readable medium comprising instructions which, when executed on a computer or on an integrated access and backhaul entity or functionality or on a network node of the radio access network or on a network node of the mobile communication network, especially an operations and maintenance entity or functionality, or in part on the integrated access and backhaul entity or functionality and/or in part on the network node of the radio access network and/or in part on the network node of the mobile communication network, especially the operations and maintenance entity or functionality, causes the computer or the integrated access and backhaul entity or functionality or the network node of the radio access network or the network node of the mobile communication network, especially the operations and maintenance entity or functionality, to perform the inventive method.

These and other characteristics, features and advantages of the present invention will become apparent from the following detailed description, taken in conjunction with the accompanying drawings, which illustrate, by way of example, the principles of the invention. The description is given for the sake of example only, without limiting the scope of the invention. The reference figures quoted below refer to the attached drawings.

### BRIEF DESCRIPTION OF THE DRAWINGS

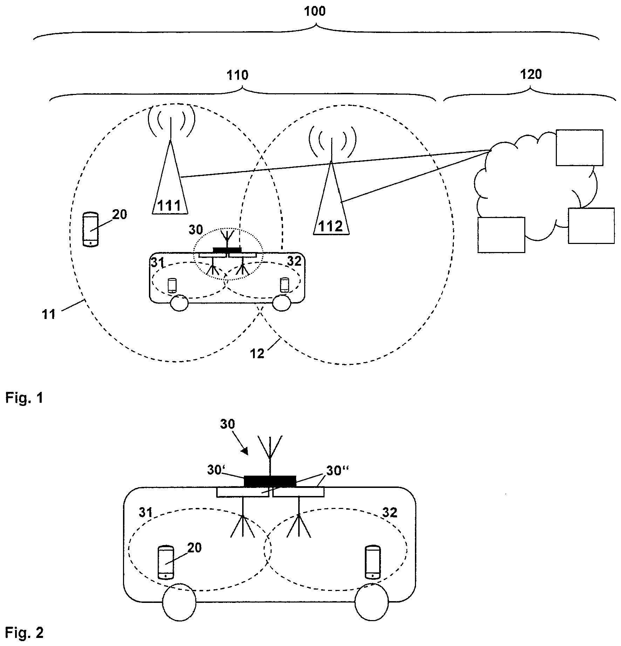

Figure 1 schematically illustrates a mobile communication network comprising a radio access network (or access network), a core network and a user equipment, wherein the core network typically comprises a number of network functions or services, and wherein the (radio) access network likewise comprises a number of base station entities providing radio coverage for specific geographical areas, respectively, wherein - besides the base station entities of the radio access network - the mobile communication network comprises an integrated access and backhaul entity or functionality, wherein the integrated access and backhaul entity or functionality likewise provides radio coverage and/or connectivity towards the mobile communication network for specific locations or geographical areas.
Figure 2 schematically illustrates an example of an integrated access and backhaul entity or functionality, especially mounted on or as part of a public or private transport vehicle, e.g. a bus or tramway carriage.

### DETAILED DESCRIPTION

The present invention will be described with respect to particular embodiments and with reference to certain drawings but the invention is not limited thereto but only by the claims. The drawings described are only schematic and are nonlimiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

In Figure 1, a telecommunications network 100 comprising an access network 110 (or a radio access network 110), and a core network 120 is schematically shown. The telecommunications network 100 or also mobile communication network 100 is typically realized as a cellular network or cellular mobile communication network 100. The telecommunications network 100, especially the core network 120, typically comprises a number of network functions or services (not explicitly represented, in Figure 1, e.g. by means of reference signs). Examples of such network functions or services include, e.g., an access and mobility management function, AMF, and/or a user plane function, UPF - especially in case of a 5G telecommunications network, in which case the core network 120 might also be called a 5G core (system) and the access network 110 or radio access network 110 a next-generation radio access network, NG-RAN. The radio access network 110 comprises a plurality of radio cells 11, 12, i.e. geographical areas served, respectively, by base station entities. In the exemplary situation or scenario shown in Figure 1, a first base station entity 111 generates or is associated with or spans the first radio cell 11, and a second base station entity 112 generates or is associated with or spans the second radio cell 12. The base station entities 111, 112 typically realize gNB functionality according to 3GPP 5G standard. The mobile communication network 100 is typically connected to a plurality of user equipments 20 (or, rather, the user equipments 20 are connected to the mobile communication network 100), one of which is schematically shown in Figure 1.
The base station entities 111, 112 of the radio access network 110 provide radio coverage for specific geographical areas, respectively.

In the exemplary representation of Figure 1, an integrated access and backhaul entity or functionality 30 (or integrated access and backhaul device 30) is schematically shown being located somewhere in the coverage area of the first and/or second base station entity 111, 112. In the exemplary representation of Figure 1, the integrated access and backhaul entity or functionality 30 is shown as a mobile integrated access and backhaul entity or functionality 30, especially aboard a vehicle. The (mobile) integrated access and backhaul entity or functionality 30 comprises a mobile termination IAB-MT/mIAB-MT, and acts against the radio access network (or mobile radio network) 110 as a user equipment. Furthermore, the (mobile) integrated access and backhaul entity or functionality 30 comprises a distributed unit, IAB-DU/mIAB-DU, corresponding to an entity acting as a base station or base station entity (such as a gNB in a 5G network) towards user equipments connected thereto, e.g., user equipments used by passengers aboard the vehicle.

In Figure 2, an example of the integrated access and backhaul entity or functionality 30 is schematically shown: The integrated access and backhaul entity or functionality 30 is especially mounted on or as part of a public or private transport vehicle, e.g. a bus or tramway carriage. In the exemplary representation of Figures 1 and 2, the (mobile) integrated access and backhaul entity or functionality 30 comprises one mobile termination IAB-MT/mIAB-MT 30' (acting against the residual part of the radio access network (or mobile radio network) 110 as a user equipment); furthermore in the exemplary representation of Figures 1 and 2, the (mobile) integrated access and backhaul entity or functionality 30 exemplarily comprises two distributed units, IAB-DU/mlAB-DU, 30" corresponding to entities acting, respectively, as base stations or base station entities, and providing radio coverage in respective radio cells 31, 32 (especially, primarily, within the public or private transport vehicle). Each such base station entity 30" (or each such distributed unit) of the integrated access and backhaul entity or functionality 30, hence, generates a radio cell 31, 32 towards user equipments connected thereto, e.g., a user equipment 20 schematically shown and used by passengers aboard the vehicle.
From the point of view of the user equipment 20 (either being served by the first base station entity 111, as shown in Figure 1, or being served by one of the distributed units 30" of the (mobile) integrated access and backhaul entity or functionality 30, as shown in Figure 2) the (mobile) integrated access and backhaul entity or functionality 30 (or rather its distributed units 30" generating the radio cells 31, 32) and the base station entities 111, 112 form the radio access network 110 of the mobile communication network 100, even though the (mobile) integrated access and backhaul entity or functionality 30 itself (by means of its mobile termination 30') acts as a user equipment towards the residual radio access network 110, i.e., in the representation shown in Figure 1, the first and second base station entities 111, 112.

In any case, as both the radio access network 110 together with the (mobile) integrated access and backhaul entity or functionality 30 need to provide radio access network functionalities (especially radio coverage) towards the user equipments 20 when such user equipments 20 are located at their respective locations (either close to the (mobile) integrated access and backhaul entity or functionality 30 - especially inside the public or private transportation vehicle -, or further away thereof, and, hence, outside of radio coverage 31, 32 provided by (the distributed units of) the (mobile) integrated access and backhaul entity or functionality 30 - but served by the first or second base station entity 111, 112), there needs to be an integration of the (mobile) integrated access and backhaul entity or functionality 30 with the radio access network 110 regarding the assignment and/or the allocation of physical cell identity information.

According to well-established principles of mobile communication networks, each radio cell - whether it is the radio cells 11, 12 of (or provided by) the base station entities 111, 112, or the radio cells 31, 32 of (or provided by) the distributed units of the (mobile) integrated access and backhaul entity or functionality 30 - needs to use a physical cell identity information in a manner such that neighboring or adjacent radio coverage areas use different pieces of physical cell identity information. Thus, in a radio access network 110 without (mobile) integrated access and backhaul entities or functionalities 30 (with only base station entities 111, 112, and, perhaps, non-mobile, i.e. stationary, integrated access and backhaul entities or functionalities, not shown in Figure 1) each one of such radio cells 11, 12 uses a physical cell identity information in a manner such that neighboring or adjacent radio cells 11, 12 of the radio access network 110 use different pieces of physical cell identity information.

According to the present invention, integrated access and backhaul entities or functionalities 30 - especially mobile integrated access and backhaul entities or functionalities - are able to be used within or as part of mobile communication networks 100, i.e. as part of the respective radio access network 110 comprising the base station entities 111, 112. The (especially mobile) integrated access and backhaul entity or functionality 30 likewise uses at least one piece of specific physical cell identity information - in the exemplary embodiment shown in Figure 2, the (mobile) integrated access and backhaul entity or functionality 30, having or generating two radio cells 31, 32 typically needs to use two different pieces of specific physical cell identity information. In order to assign or to allocate the at least one piece of specific physical cell identity information (to the (mobile) integrated access and backhaul entity or functionality 30) in a manner such that the radio cells 11, 12 - of the base station entities 111, 112, i.e. of the radio access network 110 besides the considered integrated access and backhaul entity or functionality 30 - that are located in the vicinity (of the considered integrated access and backhaul entity or functionality 30) use different pieces of physical cell identity information, the method according to the present invention comprises the step of assigning or allocating the at least one specific physical cell identity information (to the considered integrated access and backhaul entity or functionality 30) in a dynamic process of physical cell identity allocation.

Especially, this means that there is, according to the present invention, no static and/or reserved range of pieces of physical cell identity information being used to be assigned or allocated to the considered integrated access and backhaul entity or functionality 30 as the pieces of specific physical cell identity information, and with only 1008 unique physical cell identity information available (to distinguish different radio cells, especially according to new radio, NR, technology) and a massive increase of, especially mobile, integrated access and backhaul entities or functionalities such a static assignment or allocation is inefficient.
According to the present invention, instead of reserving a (static) range of certain pieces of physical cell identity information (e.g. a number of x PCIs of the available 1008 unique PCIs) for, especially mobile, integrated access and backhaul entities or functionalities, it is proposed to define a flexible dynamic process of PCI allocation for integrated access and backhaul entities or functionalities, especially mobile integrated access and backhaul entities or functionalities, especially those installed or mounted, for example, in a bus or tram or car, or another public or private vehicle, to provide in-carriage coverage. Especially, it is proposed, according to the present invention, that any one of all possible pieces of physical cell identity information are potentially able to be allocated or assigned to the considered integrated access and backhaul entity or functionality 30, especially the possible pieces of physical cell identity information correspond to all 1008 different pieces of physical cell identity information according to the new radio, NR, standard (and not only to a pre-defined range thereof).

Of course, according to the present invention, it is proposed to deploy a multitude of different integrated access and backhaul entities or functionalities, and especially mobile integrated access and backhaul entities or functionalities (such as the considered integrated access and backhaul entity or functionality 30), and for each one of the such integrated access and backhaul entities or functionalities, the physical cell identity assignment or allocation needs to be done such that it is assured that, at any point in time, there is no collision of physical cell identity information: I.e. it has to be assured that different integrated access and backhaul entities or functionalities (and different radio cells generated thereby) that happen to be located nearby each other use different pieces of (specific) physical cell identity information (and also that such different integrated access and backhaul entities or functionalities use different pieces of (specific) physical cell identity information as compared to the radio cells 11, 12 of the base station entities 111, 112 located at their current location).
Hence, the aim is to avoid that the piece or pieces of specific physical cell identity information used by the considered integrated access and backhaul entity or functionality 30 collides with any piece of physical cell identity information allocated or used in the vicinity thereof - especially, in case of a mobile or vehicle-mounted integrated access and backhaul entity or functionality 30, in the vicinity of the respective vehicle (bus/tram/car) as this would lead to increased interference and PCI collision.

Especially, the (considered) integrated access and backhaul entity or functionality 30 is a mobile integrated access and backhaul entity or functionality (especially aboard a vehicle).
In order to avoid PCI collision, it is required that the at least one piece of specific physical cell identity information (being assigned or allocated to the mobile integrated access and backhaul entity or functionality 30) is assigned such that radio cells 11, 12 of the radio access network 110 - but also radio cells of other (mobile) integrated access and backhaul entities or functionalities - that are located at the current location of the (considered) integrated access and backhaul entity or functionality 30 (or nearby) use different pieces of physical cell identity information.
In case that the path of the mobile integrated access and backhaul entity or functionality 30 is known, this is able to be extended: Hence, the at least one piece of specific physical cell identity information (being assigned or allocated to the mobile integrated access and backhaul entity or functionality 30) is assigned such that radio cells 11, 12 of the radio access network 110 - but also radio cells of other (mobile) integrated access and backhaul entities or functionalities - that are located at the present location as well as at future locations (along its path) of the (considered) integrated access and backhaul entity or functionality 30 (or nearby) use different pieces of physical cell identity information.

According to the present invention, the assignment or the allocation of the (specific) physical cell identity information to a considered integrated access and backhaul entity or functionality 30 is able to be performed according to different mechanisms or procedures, wherein such mechanisms or procedures are also able to be combined:
- the assignment or allocation of physical cell identity information is able to be based on measurements, by the considered integrated access and backhaul entity or functionality 30 (especially by the mIAB-MT or mobile termination 30'), of surrounding radio cells on the same frequency to avoid usage of any of the "seen" PCIs for the mIAB-DU (mobile cell);
hence, the at least one piece of specific physical cell identity information is assigned or allocated to the integrated access and backhaul entity or functionality 30 based on at least one measurement, performed by the integrated access and backhaul entity or functionality 30 regarding surrounding radio cells 11, 12 of the radio access network 110 (and/or of other or further (especially mobile) integrated access and backhaul entities or functionalities); by means of such measurements (or at least one measurement), the physical cell identity information used (by other radio cells) in the vicinity of the considered integrated access and backhaul entity or functionality 30 are determined by the integrated access and backhaul entity or functionality 30, and it is, thus, possible to avoid to use such physical cell identity information (i.e. thereby avoiding a physical cell identity collision);
- the assignment or allocation of physical cell identity information is able to be based on OAM pre-configuration (pre-configuration by an operations and maintenance entity or functionality) for planned routes (bus, tram, ...) of the mobile integrated access and backhaul entity or functionality 30 or on OAM pre-configuration with geo-fencing (assuming that the mobile integrated access and backhaul entity or functionality 30 has positioning technologies) for semi-fixed routes;
hence, the integrated access and backhaul entity or functionality 30, as a mobile integrated access and backhaul entity or functionality, travels along a predefined route or path or moves within a certain geographic area, wherein the at least one piece of specific physical cell identity information is assigned or allocated to the integrated access and backhaul entity or functionality 30, especially by means of using pre-configuration of an operations and maintenance entity or functionality of the mobile communication network 100, either regarding the complete predefined route or path or geographic area or regarding parts thereof;
- the assignment or allocation of physical cell identity information is able to be based on an indication (or a plurality of indications) by the serving cells BCCH (broadcast control channel) on to be allocated PCI for the mIAB node, i.e. its radio cell (mlAB-MT anyway reads the serving cell BCH - e.g. via PDSCH (physical downlink shared channel), SIB (system information block) x - and will get the PCI information as part of an extended or new SIB; mIAB-DU (Cell) changes the physical cell identity information used depending on the information provided from the serving cell; "allowed PCI list" or "forbidden PCI list" approaches are feasible) and/or on an Indication (or a plurality of indications) dedicated to the particular mIAB-MT as part of the dedicated RRC signaling (radio resource control signaling), e.g. handover, on to be allocated PCI for the mlAB node, i.e. its radio cell (mIAB-MT anyway stays in RRC connected mode with the network and will get the PCI information as a part of the dedicated control signaling for RRM/Mobility (e.g. handover message); mIAB-DU (radio cell) will change the physical cell identity information used depending on the information provided in a manner dedicated to the mIAB-MT; "allowed PCI list" or "forbidden PCI list" approaches are feasible);

hence, the integrated access and backhaul entity or functionality 30 is served by a serving radio cell of the radio cells 11, 12 of the radio access network 110, wherein the serving radio cell transmits, to the integrated access and backhaul entity or functionality 30, a physical cell identity indication,
wherein the physical cell identity indication relates to at least one piece of specific physical cell identity information
   -- that is able to be used by the integrated access and backhaul entity or functionality 30, and/or
   - that the integrated access and backhaul entity or functionality 30 should refrain from using,
   wherein the physical cell identity indication is transmitted, by the serving radio cell, using
   - a broadcast channel, and/or
   - a dedicated channel, especially as part of a dedicated radio resource control signaling.

According to the present invention, an exemplary definition of concrete RRC signaling messages for 5G (see below ASN.1 example) could be as follows:

### Example ASN.1 for SIB based configuration (new SIB99):

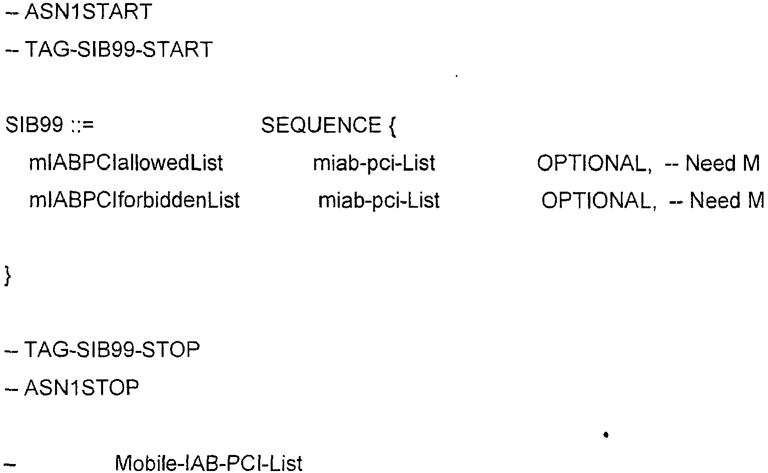

The IE Mobile-IAB-PCI-List concerns a list of physical cell identities, out of which a mobile lAB node shall select its broadcast Cell ID (PCI) depending on (geographical configuration).

### PCI-List information element

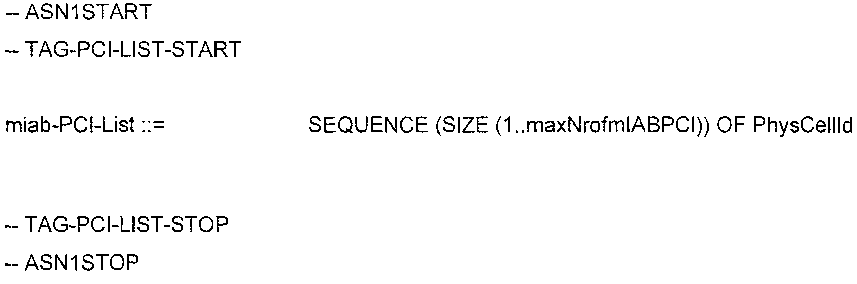

## Claims

1. Method for using an integrated access and backhaul entity or functionality (30) within or as part of a mobile communication network (100), wherein the mobile communication network (100) comprises a radio access network (110) besides the integrated access and backhaul entity or functionality (30), the radio access network (110) comprising a plurality of radio access network nodes and/or base station entities (111, 112) realizing a plurality of radio cells (11, 12) of the radio access network (11), wherein each one of the radio cells (11, 12) uses a physical cell identity information in a manner such that neighboring or adjacent radio cells (11, 12) of the radio access network (110) use different pieces of physical cell identity information,
wherein the integrated access and backhaul entity or functionality (30) likewise uses at least one piece of specific physical cell identity information,
wherein in order to assign or to allocate the at least one piece of specific physical cell identity information to the integrated access and backhaul entity or functionality (30) in a manner such that radio cells (11, 12) of the radio access network (110) which radio cells (11, 12) are located in the vicinity of the integrated access and backhaul entity or functionality (30) use different pieces of physical cell identity information, the method comprises the step of assigning or allocating the at least one specific physical cell identity information to the integrated access and backhaul entity or functionality (30) in a dynamic process of physical cell identity allocation.

2. Method according to claim 1, wherein any one of all possible pieces of physical cell identity information are potentially able to be allocated or assigned to the integrated access and backhaul entity or functionality (30), wherein especially the possible pieces of physical cell identity information correspond to all 1008 different pieces of physical cell identity information according to the new radio, NR, standard,
wherein especially a first range of possible pieces of physical cell identity information are potentially able to be allocated or assigned to the radio cells (11, 12) of the radio access network (110) and a second range of possible pieces of physical cell identity information are potentially able to be allocated or assigned to the integrated access and backhaul entity or functionality (30), and wherein the first and second range at least partially overlap, preferably completely overlap.

3. Method according to one of the preceding claims, wherein the integrated access and backhaul entity or functionality (30) is a mobile integrated access and backhaul entity or functionality, especially aboard a vehicle, especially aboard a public transport vehicle, wherein the at least one piece of specific physical cell identity information is assigned or allocated to the integrated access and backhaul entity or functionality (30) in a manner such that radio cells (11, 12) of the radio access network (110) which radio cells (11, 12) are
- currently located in the vicinity of the integrated access and backhaul entity or functionality (30), or
- currently and subsequently located in the vicinity of the integrated access and backhaul entity or functionality (30)
use different pieces of physical cell identity information.

4. Method according to one of the preceding claims, wherein the integrated access and backhaul entity or functionality (30) comprises at least one mobile termination entity or functionality (30') and at least one distributed unit (30"), wherein especially for each distributed unit (30") one piece of specific physical cell identity information assigned or allocated to the integrated access and backhaul entity or functionality (30).

5. Method according to one of the preceding claims, wherein the at least one piece of specific physical cell identity information is assigned or allocated to the integrated access and backhaul entity or functionality (30) based on at least one measurement, performed by the integrated access and backhaul entity or functionality (30) regarding surrounding radio cells (11, 12) of the radio access network (110), wherein by means of the at least one measurement, the physical cell identity information used by the surrounding radio cells (11, 12) of the radio access network (110) are determined by the integrated access and backhaul entity or functionality (30).

6. Method according to one of the preceding claims, wherein the integrated access and backhaul entity or functionality (30), as a mobile integrated access and backhaul entity or functionality, travels along a predefined route or path or moves within a certain geographic area, wherein the at least one piece of specific physical cell identity information is assigned or allocated to the integrated access and backhaul entity or functionality (30), especially by means of using pre-configuration of an operations and maintenance entity or functionality of the mobile communication network (100), according to at least one out of the following:
-- at least one piece of specific physical cell identity information is assigned or allocated regarding the complete predefined route or path or geographic area,
- at least one first piece of specific physical cell identity information is assigned or allocated regarding a first part of the predefined route or path or geographic area, and at least one second piece of specific physical cell identity information is assigned or allocated regarding a second part of the predefined route or path or geographic area,
wherein especially, the predefined route or path or geographic area and/or the first part of the predefined route or path or geographic area and the second part of the predefined route or path or geographic area is defined by means of global navigation satellite system coordinates and/or by means of geographically positioned features or characteristics of the mobile communication network, especially physical cell identity information and/or cell identity information, that are detectable by the integrated access and backhaul entity or functionality (30).

7. Method according to one of the preceding claims, wherein the integrated access and backhaul entity or functionality (30) is served by a serving radio cell of the radio cells (11, 12) of the radio access network (110), wherein the serving radio cell transmits, to the integrated access and backhaul entity or functionality (30), a physical cell identity indication,
wherein the physical cell identity indication relates to at least one piece of specific physical cell identity information
-- that is able to be used by the integrated access and backhaul entity or functionality (30), and/or
-- that the integrated access and backhaul entity or functionality (30) should refrain from using,
wherein the physical cell identity indication is transmitted, by the serving radio cell, using
- a broadcast channel, and/or
- a dedicated channel, especially as part of a dedicated radio resource control signaling.

8. System or mobile communication network (100) or integrated access and backhaul entity or functionality (30) being used within or as part of the mobile communication network (100), wherein the mobile communication network (100) comprises a radio access network (110) besides the integrated access and backhaul entity or functionality (30), the radio access network (110) comprising a plurality of radio access network nodes and/or base station entities (111, 112) realizing a plurality of radio cells (11, 12) of the radio access network (11), wherein each one of the radio cells (11, 12) uses a physical cell identity information in a manner such that neighboring or adjacent radio cells (11, 12) of the radio access network (110) use different pieces of physical cell identity information,
wherein the integrated access and backhaul entity or functionality (30) likewise uses at least one piece of specific physical cell identity information, wherein in order to assign or to allocate the at least one piece of specific physical cell identity information to the integrated access and backhaul entity or functionality (30) in a manner such that radio cells (11, 12) of the radio access network (110) which radio cells (11, 12) are located in the vicinity of the integrated access and backhaul entity or functionality (30) use different pieces of physical cell identity information, the method comprises the step of assigning or allocating the at least one specific physical cell identity information to the integrated access and backhaul entity or functionality (30) in a dynamic process of physical cell identity allocation.

9. Program comprising a computer readable program code which, when executed on a computer or on an integrated access and backhaul entity or functionality (30) or on a network node of the radio access network (110) or on a network node of the mobile communication network (100), especially an operations and maintenance entity or functionality, or in part on the integrated access and backhaul entity or functionality (30) and/or in part on the network node of the radio access network (110) and/or in part on the network node of the mobile communication network (100), especially the operations and maintenance entity or functionality, causes the computer or the integrated access and backhaul entity or functionality (30) or the network node of the radio access network (110) or the network node of the mobile communication network (100), especially the operations and maintenance entity or functionality, to perform a method according one of claims 1 to 7.

10. Computer-readable medium comprising instructions which, when executed on a computer or on an integrated access and backhaul entity or functionality (30) or on a network node of the radio access network (110) or on a network node of the mobile communication network (100), especially an operations and maintenance entity or functionality, or in part on the integrated access and backhaul entity or functionality (30) and/or in part on the network node of the radio access network (110) and/or in part on the network node of the mobile communication network (100), especially the operations and maintenance entity or functionality, causes the computer or the integrated access and backhaul entity or functionality (30) or the network node of the radio access network (110) or the network node of the mobile communication network (100), especially the operations and maintenance entity or functionality, to perform a method according one of claims 1 to 7.

## Amended claims

### Amended claims in accordance with Rule 137(2) EPC.

1. Method for using an integrated access and backhaul entity or functionality (30) within or as part of a mobile communication network (100), wherein the mobile communication network (100) comprises a radio access network (110) besides the integrated access and backhaul entity or functionality (30), the radio access network (110) comprising a plurality of radio access network nodes and/or base station entities (111, 112) realizing a plurality of radio cells (11, 12) of the radio access network (11), wherein each one of the radio cells (11, 12) uses a physical cell identity information in a manner such that neighboring or adjacent radio cells (11, 12) of the radio access network (110) use different pieces of physical cell identity information,
wherein the integrated access and backhaul entity or functionality (30) likewise uses at least one piece of specific physical cell identity information,
wherein in order to assign or to allocate the at least one piece of specific physical cell identity information to the integrated access and backhaul entity or functionality (30) in a manner such that radio cells (11, 12) of the radio access network (110) which radio cells (11, 12) are located in the vicinity of the integrated access and backhaul entity or functionality (30) use different pieces of physical cell identity information, the method comprises the step of assigning or allocating the at least one specific physical cell identity information to the integrated access and backhaul entity or functionality (30) in a dynamic process of physical cell identity allocation, wherein any one of all possible pieces of physical cell identity information are potentially able to be allocated or assigned to the integrated access and backhaul entity or functionality (30), wherein the possible pieces of physical cell identity information correspond to all 1008 different pieces of physical cell identity information according to the new radio, NR, standard.

2. Method according to claim 1,
wherein a first range of possible pieces of physical cell identity information are potentially able to be allocated or assigned to the radio cells (11, 12) of the radio access network (110) and a second range of possible pieces of physical cell identity information are potentially able to be allocated or assigned to the integrated access and backhaul entity or functionality (30), and wherein the first and second range at least partially overlap, preferably completely overlap.

3. Method according to one of the preceding claims, wherein the integrated access and backhaul entity or functionality (30) is a mobile integrated access and backhaul entity or functionality, especially aboard a vehicle, especially aboard a public transport vehicle, wherein the at least one piece of specific physical cell identity information is assigned or allocated to the integrated access and backhaul entity or functionality (30) in a manner such that radio cells (11, 12) of the radio access network (110) which radio cells (11, 12) are
-- currently located in the vicinity of the integrated access and backhaul entity or functionality (30), or
-- currently and subsequently located in the vicinity of the integrated access and backhaul entity or functionality (30)
use different pieces of physical cell identity information.

4. Method according to one of the preceding claims, wherein the integrated access and backhaul entity or functionality (30) comprises at least one mobile termination entity or functionality (30') and at least one distributed unit (30"), wherein especially for each distributed unit (30") one piece of specific physical cell identity information assigned or allocated to the integrated access and backhaul entity or functionality (30).

5. Method according to one of the preceding claims, wherein the at least one piece of specific physical cell identity information is assigned or allocated to the integrated access and backhaul entity or functionality (30) based on at least one measurement, performed by the integrated access and backhaul entity or functionality (30) regarding surrounding radio cells (11, 12) of the radio access network (110), wherein by means of the at least one measurement, the physical cell identity information used by the surrounding radio cells (11, 12) of the radio access network (110) are determined by the integrated access and backhaul entity or functionality (30).

6. Method according to one of the preceding claims, wherein the integrated access and backhaul entity or functionality (30), as a mobile integrated access and backhaul entity or functionality, travels along a predefined route or path or moves within a certain geographic area, wherein the at least one piece of specific physical cell identity information is assigned or allocated to the integrated access and backhaul entity or functionality (30), especially by means of using preconfiguration of an operations and maintenance entity or functionality of the mobile communication network (100), according to at least one out of the following:
-- at least one piece of specific physical cell identity information is assigned or allocated regarding the complete predefined route or path or geographic area,
-- at least one first piece of specific physical cell identity information is assigned or allocated regarding a first part of the predefined route or path or geographic area, and at least one second piece of specific physical cell identity information is assigned or allocated regarding a second part of the predefined route or path or geographic area,
wherein especially, the predefined route or path or geographic area and/or the first part of the predefined route or path or geographic area and the second part of the predefined route or path or geographic area is defined by means of global navigation satellite system coordinates and/or by means of geographically positioned features or characteristics of the mobile communication network, especially physical cell identity information and/or cell identity information, that are detectable by the integrated access and backhaul entity or functionality (30).

7. Method according to one of the preceding claims, wherein the integrated access and backhaul entity or functionality (30) is served by a serving radio cell of the radio cells (11, 12) of the radio access network (110), wherein the serving radio cell transmits, to the integrated access and backhaul entity or functionality (30), a physical cell identity indication,
wherein the physical cell identity indication relates to at least one piece of specific physical cell identity information
-- that is able to be used by the integrated access and backhaul entity or functionality (30), and/or
-- that the integrated access and backhaul entity or functionality (30) should refrain from using,
wherein the physical cell identity indication is transmitted, by the serving radio cell, using
-- a broadcast channel, and/or
-- a dedicated channel, especially as part of a dedicated radio resource control signaling.

8. System or mobile communication network (100) or integrated access and backhaul entity or functionality (30) being used within or as part of the mobile communication network (100), wherein the mobile communication network (100) comprises a radio access network (110) besides the integrated access and backhaul entity or functionality (30), the radio access network (110) comprising a plurality of radio access network nodes and/or base station entities (111, 112) realizing a plurality of radio cells (11, 12) of the radio access network (11), wherein each one of the radio cells (11, 12) uses a physical cell identity information in a manner such that neighboring or adjacent radio cells (11, 12) of the radio access network (110) use different pieces of physical cell identity information,
wherein the integrated access and backhaul entity or functionality (30) likewise uses at least one piece of specific physical cell identity information,
wherein in order to assign or to allocate the at least one piece of specific physical cell identity information to the integrated access and backhaul entity or functionality (30) in a manner such that radio cells (11, 12) of the radio access network (110) which radio cells (11, 12) are located in the vicinity of the integrated access and backhaul entity or functionality (30) use different pieces of physical cell identity information, the method comprises the step of assigning or allocating the at least one specific physical cell identity information to the integrated access and backhaul entity or functionality (30) in a dynamic process of physical cell identity allocation, wherein any one of all possible pieces of physical cell identity information are potentially able to be allocated or assigned to the integrated access and backhaul entity or functionality (30), wherein the possible pieces of physical cell identity information correspond to all 1008 different pieces of physical cell identity information according to the new radio, NR, standard.

9. Program comprising a computer readable program code which, when executed on a computer or on an integrated access and backhaul entity or functionality (30) or on a network node of the radio access network (110) or on a network node of the mobile communication network (100), especially an operations and maintenance entity or functionality, or in part on the integrated access and backhaul entity or functionality (30) and/or in part on the network node of the radio access network (110) and/or in part on the network node of the mobile communication network (100), especially the operations and maintenance entity or functionality, causes the computer or the integrated access and backhaul entity or functionality (30) or the network node of the radio access network (110) or the network node of the mobile communication network (100), especially the operations and maintenance entity or functionality, to perform a method according one of claims 1 to 7.

10. Computer-readable medium comprising instructions which, when executed on a computer or on an integrated access and backhaul entity or functionality (30) or on a network node of the radio access network (110) or on a network node of the mobile communication network (100), especially an operations and maintenance entity or functionality, or in part on the integrated access and backhaul entity or functionality (30) and/or in part on the network node of the radio access network (110) and/or in part on the network node of the mobile communication network (100), especially the operations and maintenance entity or functionality, causes the computer or the integrated access and backhaul entity or functionality (30) or the network node of the radio access network (110) or the network node of the mobile communication network (100), especially the operations and maintenance entity or functionality, to perform a method according one of claims 1 to 7.
